# EUROPEAN PATENT APPLICATION

(11) **EP 4 756 793 A1**
(43) Date of publication of application: **10.06.2026**
(21) Application number: 25207010.7
(22) Date of filing: 06.10.2025
(51) Int. Cl.: G10L 15/22, G10L 15/30

(54) **SPEECH INTERACTION DEVICE, APPARATUS, METHOD, AND MEDIUM**

(30) Priority: 06.12.2024 CN 202411798792
(71) Applicant: Beijing Zitiao Network Technology Co., Ltd., Beijing 100190 (CN)
(72) Inventor: DU, Peng, Beijing, 100028 (CN)
(74) Representative: Marks & Clerk LLP

(57) **Abstract**

A speech interaction device, apparatus, method, and medium are provided. The speech interaction device includes, a speech processor (110), a first communication module (120), at least one microphone (130) and a speech interaction system (140), where the speech interaction system (140) includes a second communication module (141). A first input terminal of the speech processor (110) is connected with the microphone (130), a first output terminal of the speech processor (110) is connected with the first communication module (120), and the speech processor (110) is configured to determine that the microphone (130) obtains a first speech signal, establish a connection with a cloud server through the first communication module (120), and send the first speech signal obtained by the microphone (130) to the cloud server. The speech interaction system (140) is connected with the cloud server through the second communication module (141), and the speech interaction system (140) is configured to receive a first response signal sent by the cloud server for speech interaction.

## Description

### TECHNICAL FIELD

The present disclosure relates to a speech interaction device, an apparatus, a method, and a medium.

### BACKGROUND

With the continuous progress of speech interaction technology, more and more electronic devices will be equipped with speech interaction function, so that users can control electronic devices to perform corresponding operations through speech commands, such as playing music and querying weather conditions, etc., which can improve the convenience and efficiency of users using electronic devices.

At present, when an electronic device equipped with speech interaction function performs speech interaction with a user, the processor in the electronic device needs to receive the interactive speech input by the user in real time, and perform speech recognition on the interactive speech to obtain speech instructions, and then perform corresponding operations according to the speech instructions. However, this speech interaction method needs to consume a large amount of power, which affects the battery life of the electronic device.

### SUMMARY

An embodiment of the present disclosure provides a speech interaction device, including: a speech processor, a first communication module, at least one microphone and a speech interaction system, where the speech interaction system includes a second communication module;
a first input terminal of the speech processor is connected with the microphone, a first output terminal of the speech processor is connected with the first communication module, and the speech processor is configured to determine that the microphone obtains a first speech signal, establish a connection with a cloud server through the first communication module, and send the first speech signal obtained by the microphone to the cloud server; and
the speech interaction system is connected with the cloud server through the second communication module, and the speech interaction system is configured to receive a first response signal sent by the cloud server for speech interaction.

An embodiment of the present disclosure provides a cloud server, includes: a second speech recognition module and a second speech response module;
the second speech recognition module is configured to convert a speech signal sent by a speech interaction device into text information;
the second speech response module is configured to generate a first response signal according to the text information output by the second speech recognition module, and send the first response signal to the speech interaction device, so that the speech interaction device performs speech interaction according to the first response signal.

An embodiment of the present disclosure provides a speech interaction apparatus, including a speech interaction device of the above embodiment and the cloud server of the above embodiment.

An embodiment of the present disclosure provides a speech interaction method, applied to the speech interaction device of the above embodiment, and the method includes:
sending, in response to the microphone obtaining the first speech signal, the first speech signal obtained by the microphone to the cloud server; and
performing speech interaction according to the first response signal sent by the cloud server.

An embodiment of the present disclosure provides a speech interaction method, applied to the cloud server of the above embodiment, and the method includes:
receiving the speech signal sent by the speech interaction device, where the speech signal includes a first speech signal;
generating the first response signal according to the speech signal;
sending the first response signal to the speech interaction device, so that the speech interaction device performs speech interaction according to the first response signal.

An embodiment of the present disclosure provides a non-transitory computer-readable storage medium, configured to store a computer program, where the computer program causes a computer to execute the speech interaction method of the above embodiments and implementations.

An embodiment of the present disclosure provides a computer program product containing program instructions, where the program instructions, when run on an electronic device, cause the electronic device to execute the speech interaction method of the above embodiments and implementations.

### BRIEF DESCRIPTION OF DRAWINGS

In order to illustrate the technical solutions in the embodiments of the present more clearly, the drawings required in describing the embodiments will be briefly introduced below. Apparently, the drawings in the following description are some embodiments of the present disclosure. For those of ordinary skill in the art, other drawings may be obtained according to these drawings without creative efforts.
Fig. 1 is a schematic structural diagram of a speech interaction device provided by an embodiment of the present disclosure;
Fig. 2 is a schematic structural diagram of a speech interaction device provided by an embodiment of the present disclosure;
Fig. 3 is a schematic structural diagram of a speech interaction device provided by an embodiment of the present disclosure;
Fig. 4 is a schematic structural diagram of a speech interaction device provided by an embodiment of the present disclosure;
Fig. 5 is a schematic structural diagram of a speech interaction device provided by an embodiment of the present disclosure;
Fig. 6 is a schematic structural diagram of a speech interaction device provided by an embodiment of the present disclosure;
Fig. 7 is a schematic structural diagram of a speech interaction device provided by an embodiment of the present disclosure;
Fig. 8 is a schematic structural diagram of a cloud server provided by an embodiment of the present disclosure;
Fig. 9 is a structural diagram of a speech interaction apparatus provided by an embodiment of the present disclosure;
Fig. 10 is a flowchart of a speech interaction method provided by an embodiment of the present disclosure; and
Fig. 11 is a flowchart of a speech interaction method provided by an embodiment of the present disclosure.

### DETAILED DESCRIPTION

The following will provide a clear and complete description of the technical solution in the disclosed embodiments of the present disclosure, in conjunction with the accompanying drawings. Obviously, the described embodiments are only a part of the disclosed embodiments of the present disclosure, and not all of them. According to the embodiments disclosed in the present disclosure, all other embodiments obtained by ordinary skilled persons in this field without creative efforts are within the scope of protection of the present disclosure.

It should be noted that, in the specification, claims, and accompanying drawings of the present disclosure, the terms "first," "second," and the like are intended to distinguish between similar objects but do not necessarily indicate a specific order or sequence. It should be understood that the terms used in such a way are interchangeable in proper circumstances, so that the embodiments of the present disclosure described herein can be implemented in other orders than those illustrated or described herein. In addition, the terms "include," "have," and any other variants mean to cover the non-exclusive inclusion; for example, a process, method, system, product, or server that includes a series of steps or units is not necessarily limited to those steps or units explicitly listed, but may include other steps or units not explicitly listed or inherent to such process, method, system, product, or device.

In the embodiments of the present disclosure, the terms "exemplary," or "for example," etc., are used to represent an example, illustration, or description. Any embodiment or solution described by using "exemplary" or "for example" in the embodiments of the present application should not be construed as being preferred or advantageous over other embodiments or solutions. To be precise, the terms "exemplary," or "for example," etc., are intended to present a related concept in a specific manner.

In the description of the embodiments of the present disclosure, unless otherwise specified, "a plurality of" means two or more, that is, at least two. "At least one" means one or more. "Any" means any one or several.

At present, when an electronic device equipped with speech interaction function performs speech interaction with a user, the processor in the electronic device needs to receive the interactive speech input and authorized by the user in real time, and perform speech recognition and other processing on the interactive speech authorized by the user to obtain speech instructions, and then perform corresponding operations according to the speech instructions. However, this speech interaction method needs to consume a large amount of power, which affects the battery life of the electronic device.

In view of the above technical problem, the embodiments of the present disclosure provide a speech interaction device, an apparatus, a method, a cloud server and a medium, so as to solve the problem that the battery life of the electronic device is affected because of consuming a large amount of power during speech interaction.

It is to be understood that before using technical solutions disclosed in various embodiments of the present disclosure, a user should be notified of the type, scope of use, use scene and the like of personal information involved in the present disclosure in an appropriate manner according to relevant laws and regulations, and authorization from the user should be acquired. For example, in response to receiving an active request from a user, prompt information is sent to the user to explicitly remind the user that the requested operation requires acquisition and use of personal information of the user. Therefore, the user can independently choose, according to the prompt information, whether to provide personal information to software or hardware, such as an electronic device, an application program, a server, or a storage medium, etc., for executing operations of the technical solution of the present disclosure.

As an optional but non-limiting implementation, in response to receiving the active request from the user, the manner in which the prompt information is sent to the user may be, for example, in the form of a pop-up window in which the prompt information may be presented in text. Additionally, the pop-up window may also carry a selection control for the user to select "agree" or "disagree" to determine whether to provide personal information to the electronic device. It should be understood that the preceding process of notifying the user and obtaining authorization from the user is illustrative only and does not limit the embodiments of the present disclosure, and that other manners complying with relevant laws and regulations may also be applied to the embodiments of the present disclosure. It should be understood that the data of the user's personal information involved in the technical solution (including but not limited to the data itself, acquisition, storage or use of the data) should comply with the requirements of corresponding laws, regulations and relevant rules, and do not violate public order and good customs.

The technical solutions provided by the embodiments of the present disclosure will be described in detail through some embodiments. The embodiments described below can be combined with each other, and the same or similar concepts or processes may not be repeated in some embodiments.

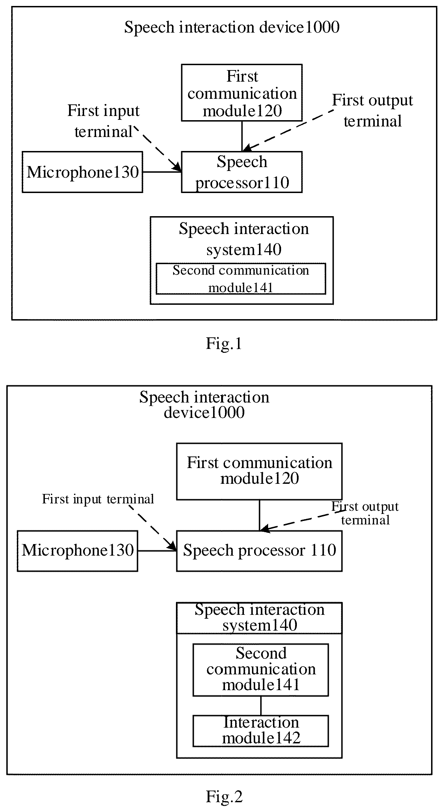

Fig. 1 is a schematic structural diagram of a speech interaction device provided by an embodiment of the present disclosure. As shown in Fig. 1, the speech interaction device 1000 provided by the embodiment of the present disclosure can include a speech processor 110, a first communication module 120, at least one microphone 130 and a speech interaction system 140, where the speech interaction system 140 includes a second communication module 141.

The first input terminal of the speech processor 110 is connected with the microphone 130, the first output terminal of the speech processor 110 is connected with the first communication module 120, and the speech processor 110 is configured to determine that the microphone 130 obtains a first speech signal, establish a connection with a cloud server through the first communication module 120, and send the first speech signal obtained by the microphone 130 to the cloud server.

The speech interaction system 140 is connected with the cloud server through the second communication module 141, and the speech interaction system 140 is configured to receive a first response signal sent by the cloud server for speech interaction.

In the embodiment of the present disclosure, the speech processor 110 is a low-power speech processor; the first communication module 120 is a low-power wireless communication module, and the power consumption of the first communication module 120 is lower than the power consumption of the second communication module 141. It should be understood that the power consumption of the first communication module 120 is lower than the power consumption of the second communication module 141, which can be that the first communication module 120 and the second communication module 141 are two same modules but have different power consumption when being started to run, or that the first communication module 120 and the second communication module 141 are two different modules, which is not limited in the present disclosure.

The low-power wireless communication module can be selected as but not limited to a low-power WiFi communication module or a low-power LoRa module, etc.

In the present disclosure, the second communication module 141 can be but not limited to a WiFi communication module, a 4G wireless communication module or a 5G wireless communication module, etc.

The first response signal can be understood as a first speech response signal, that is, a speech reply signal generated by the cloud server based on any speech signal sent by the speech interaction device 1000. Optionally, the first response signal can be response speech data, or response text data, or response speech data and response text data. That is, the first response signal can be at least one of response speech data and response text data.

In the present disclosure, the any speech signal sent by the speech interaction device 1000 can be the first speech signal, or can be the first speech signal and at least one other speech signal other than the first speech signal. For example, when the any speech signal sent by the speech interaction device 1000 is the first speech signal and at least one other speech signal other than the first speech signal, the at least one other speech signal can be any number of speech signals located after the first speech signal.

In some optional embodiments, when the speech interaction device 1000 does not obtain the interactive speech input by the user, the speech interaction device 1000 can be in a standby state. Moreover, when the speech interaction device 1000 is in the standby state, each microphone 130 in the speech interaction device 1000 can continuously acquire the surrounding speech signals, and in response to any microphone 130 acquiring a speech signal, it can send the speech signal as the first speech signal to the speech processor 110. Further, the speech processor 110 determines that the user may need to perform speech interaction according to the first speech signal. At this time, the speech interaction device 1000 can be controlled to switch from the standby state to a working state, and the first speech signal acquired by any microphone 130 can be sent to the cloud server through the communication connection established between the first communication module 120 and the cloud server.

It is considered that each microphone 130 in the speech interaction device 1000 can acquire speech signals in real time when it is in the working state. Therefore, after the speech processor 110 sends the first speech signal acquired by any microphone 130 to the cloud server through the communication connection established between the first communication module 120 and the cloud server, any microphone 130 can continuously acquire at least one other speech signal. Then, correspondingly, the speech processor 110 will continuously send the at least one other speech signal acquired by any microphone 130 to the cloud server through the communication connection established between the first communication module 120 and the cloud server.

In responses to receiving the first speech signal or the first speech signal and the at least one other speech signal sent by the speech interaction device 1000, the cloud server can generate a first response signal according to the first speech signal or according to the first speech signal and the at least one other speech signal. Further, the cloud server can send the generated first response signal to the speech interaction system 140 in the speech interaction device 1000 through the communication connection established between the cloud server and the second communication module 141, so that the speech interaction system 140 can receive the first response signal sent by the cloud server and perform speech interaction with the user.

That is to say, the speech interaction system 140 in the speech interaction device 1000 in the present disclosure can be configured to perform speech interaction according to the first response signal sent by the cloud server, where the first response signal sent by the cloud server is generated based on any speech signal obtained by at least one microphone 130. In the present disclosure, the any speech signal includes the first speech signal and other speech signals other than the first speech signal. In this way, on the basis of the speech interaction system 140 and at least one microphone 130 of the speech interaction device 1000, a low-power speech processor (i.e., the speech processor 110) and a low-power wireless communication module (the first communication module 120) are added, so that in response to obtaining interactive speech sent by any microphone, the low-power speech processor can establish communication connection with the cloud server through the low-power wireless communication module, and upload the interactive speech to the cloud server in real time; corresponding interactive response data is generated through the cloud server, so that the speech interaction device can perform speech interaction with the user based on the interactive response data generated by the cloud server; therefore, there is no need to use the second communication module 141 with high power consumption in the speech interaction device 1000, and the power consumption of the electronic device can be reduced while the real-time requirement of speech interaction is satisfied, thereby prolonging the battery life of the electronic device.

In some optional embodiments, it is considered that if the communication connection between the first communication module 120 in the speech interaction device 1000 and the cloud server is always established, the power consumption of the speech interaction device 1000 may increase and the battery life of the speech interaction device 1000 may be affected. Therefore, the speech processor 110 in the present disclosure is further configured to establish a connection with the cloud server through the first communication module 120 in response to determining that a second speech signal obtained by the microphone 130 meets a first preset condition, and send the first speech signal obtained by the microphone 130 to the cloud server, where the second speech signal is earlier than the first speech signal, that is the second speech signal being obtained by the microphone is before the first speech signal being obtained by the microphone.

Optionally, each microphone 130 in the present disclosure will continuously acquire the surrounding speech signals upon starting to work. Then, when any microphone 130 acquires the second speech signal before the first speech signal, that is, any microphone 130 acquires the second speech signal firstly, this microphone 130 can send the second speech signal to the speech processor 110, so that the speech processor 110 can perform keyword detection operation or the like on the second speech signal to determine whether there is a preset keyword in the second speech signal. When it is determined that there is at least one preset keyword in the second speech signal, it means that the user needs to perform speech interaction with the speech interaction device 1000. At this time, the speech processor 110 can establish a communication connection with the cloud server through the first communication module 120. Further, when the speech processor 110 receives the first speech signal sent by the microphone 130, it can send the first speech signal to the cloud server through the first communication module 120.

In response to receiving the first speech signal or the first speech signal and at least one other speech signal sent by the speech interaction device 1000, the cloud server can generate a first response signal according to the first speech signal or according to the first speech signal and the at least one other speech signal. Further, the cloud server can send the generated first response signal to the speech interaction system 140 in the speech interaction device 1000 through the communication connection established between itself and the second communication module 141, so that the speech interaction system 140 can receive the first response signal sent by the cloud server and perform speech interaction with the user. In this way, the speech processor 110 detects whether the second speech signal includes a preset keyword, so that the speech interaction device 1000 can be controlled to quickly enter the working state from the standby state when the user needs speech interaction, thereby further reducing the power consumption of the speech interaction device 1000 and prolonging the battery life of the speech interaction device 1000. Moreover, it can also reduce the interference of irrelevant speech data and improve the accuracy and clarity of speech interaction.

In some optional embodiments, as shown in Fig. 2, the speech interaction system 140 provided by the embodiment of the present disclosure can further include an interaction module 142.

The interaction module 142 is connected with the cloud server through the second communication module 141, and is configured to receive the first response signal sent by the cloud server and perform speech interaction according to the first response signal.

Optionally, the first response signal can be at least one of response speech data and response text data. Therefore, after receiving the first response signal sent by the cloud server, the interaction module 142 can determine the type of the first response signal. If it is determined that the first response signal is response speech data, the response speech data is played to the user through the speaker in the speech interaction system 140. If it is determined that the first response signal is response text data, the response text data is converted into response speech data, and the response speech data is played to the user through the speaker in the speech interaction system 140. If it is determined that the first response signal is response speech data and response text data, the response speech data is played to the user through the speaker, and the response text data is displayed to the user through an interactive screen provided by the interaction module 142, thus achieving the purpose of speech interaction with the user.

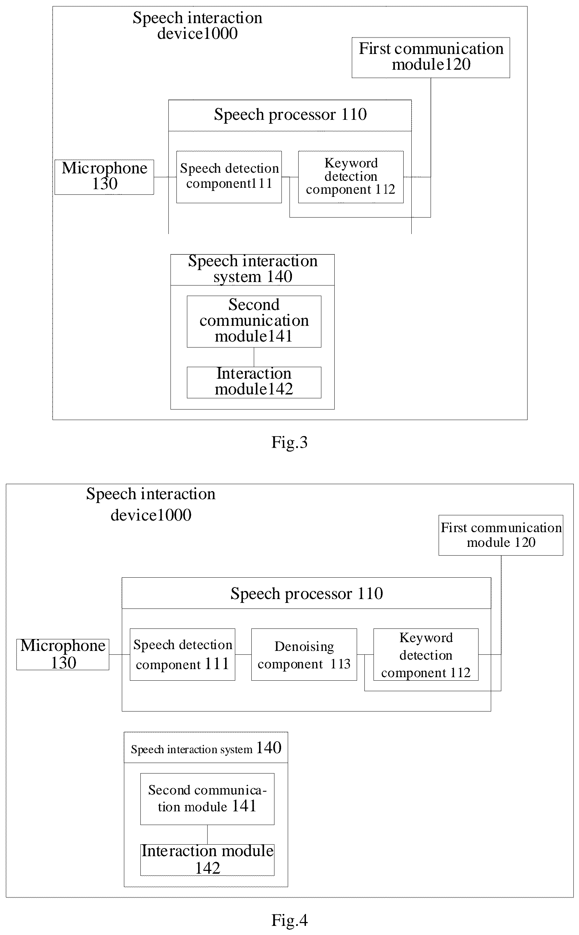

In some optional embodiments, as shown in Fig. 3, the speech processor 110 provided by the embodiment of the present disclosure can include a speech detection component 111 and a keyword detection component 112.

The input terminal of the speech detection component 111 is connected with the microphone 130, and the speech detection component 111 is configured to perform speech detection on the second speech signal obtained by the microphone 130 to obtain a second speech segment;

The input terminal of the keyword detection component 112 is connected with the output terminal of the speech detection component 111, the keyword detection component 112 is configured to perform keyword detection on the second speech segment output by the speech detection component 111, determine that the second speech signal meets the first preset condition in response to determining that the second speech segment includes at least one preset keyword, and establish the connection with the cloud server through the first communication module 120.

The speech detection component 111 can be understood as a Voice Activity Detection (VAD) component, which is configured to recognize a speech part and a non-speech part in an audio signal (i.e., the speech signal in the present disclosure) and determine the recognized speech part as the second speech segment. The non-speech part can be a background noise part or a mute part.

The first preset condition can refer to the detection of a trigger keyword for establishing a communication connection between the speech processor 110 and the cloud server in the second speech signal. The trigger keyword can be understood as a preset keyword. Establishing a communication connection between the speech processor 110 and the cloud server can be establishing a communication connection between the speech processor 110 and the cloud server through the first communication module 120.

In some optional embodiments, after the speech detection component 111 receives the second speech signal sent by any microphone 130, it can recognize the second speech signal to obtain a speech part including human voice and a non-speech part excluding human voice from the second speech signal, and determine the speech part including human voice as the second speech segment. Then, the speech detection component 111 outputs the second speech segment to the keyword detection component 112, so that the keyword detection component 112 can detect whether the second speech segment includes at least one preset keyword, and then perform different operations according to the detection result.

Optionally, the keyword detection component 112 detects whether the second speech segment includes at least one preset keyword, which may be achieved through one of the following methods:
Method 1: a feature vector of the second speech segment and a feature vector of each preset keyword are obtained, and the similarity between the feature vector of the second speech segment and the feature vector of each preset keyword is calculated. When any similarity is greater than a similarity threshold, it is determined that the preset keyword corresponding to this similarity is included in the second speech segment. When each similarity is less than or equal to the similarity threshold, it is determined that the second speech segment does not include preset keywords.
Method 2: when the keyword detection component 112 supports any keyword detection model, the second speech segment can be input into the keyword detection model, so as to process the second speech segment through the keyword detection model and output the keyword detection result for the second speech segment.

The keyword detection result includes a first detection result and a second detection result. The first detection result is that the second speech segment includes a preset keyword and specific preset keyword information. The second detection result is that the second speech segment does not include preset keywords.

After obtaining the detection result, if the keyword detection component 112 determines that the detection result is that the second speech segment includes at least one preset keyword, it is determined that the second speech signal meets the first preset condition. At this time, the speech processor establishes a connection with the cloud server through the first communication module 120, so that the subsequent first speech signal obtained by the microphone 130 can be sent to the cloud server based on the established communication connection, so that the cloud server can perform speech parsing based on any speech signal obtained from the speech interaction device 1000 and generate the corresponding first response signal. On the contrary, if the keyword detection component 112 determines that the detection result is that the second speech segment does not include preset keywords, it is determined that the second speech signal does not meet the first preset condition. At this time, the speech processor does not establish a connection with the cloud server through the first communication module 120, and continues to receive the surrounding second speech signals acquired by each microphone 130 and to determine whether the second speech signal meets the first preset condition. In this way, the communication connection between the speech processor 110 and the cloud server can be established through the first communication module 120 only when the speech processor 110 determines that the second speech signal includes a preset keyword, which can avoid the problem of a large amount of power consumption caused by the communication connection between the speech processor 110 and the cloud server being established through the first communication module 120 all the time, thus effectively prolonging the standby time of the speech interaction device 1000.

In some embodiments, it is considered that after the speech processor 110 establishes the communication connection between the speech processor 110 and the cloud server through the first communication module 120 according to the second speech signal including the preset keyword, the speech processor 110 may receive the first speech signal sent by any microphone 130. That is, the speech processor 110 may receive the first speech signal input by the user and authorized by the user for genuine speech interaction. In this regard, in the embodiment of the present disclosure, the output terminal of the speech detection component 111 can be connected with the first communication module 120, as shown in Fig. 3.

The speech detection component 111 is further configured to perform speech detection on the first speech signal obtained by the microphone 130 to obtain a first speech segment, and send the first speech segment to the cloud server through the first communication module 120, so that the cloud server generates the first response signal based on the first speech segment.

That is, after the communication connection with the cloud server is established through the first communication module 120, when the speech detection component 111 in the speech processor 110 receives the first speech signal sent by any microphone 130, the speech detection component 111 can firstly perform speech detection on the first speech signal to obtain the first speech segment. Then, the first speech segment is sent to the cloud server through the first communication module 120, so that the cloud server can quickly generate the first response signal based on the first speech segment. In this way, the complexity of the cloud server processing the interactive speech data sent by the speech interaction device 1000 can be reduced, and the transmission efficiency and response efficiency of the interactive speech data can be improved.

It is considered that the speech segment obtained by the speech detection component 111 from the speech signal sent by the microphone 130 may have noise. The speech signal can include the first speech signal, the second speech signal, and other speech signals other than the first speech signal and the second speech signal. Therefore, the speech processor 110 in an optional embodiment of the present disclosure can further include a denoising component 113, as shown in Fig. 4.

The input terminal of the denoising component 113 is connected with the output terminal of the speech detection component 111, and the denoising component 113 is configured to perform denoise processing on the second speech segment output by the speech detection component;

The input terminal of the keyword detection component 112 is connected with the output terminal of the denoising component 113, and the keyword detection component 112 is configured to perform keyword detection on the denoised second speech segment output by the denoising component 113, determine that the second speech signal meets the first preset condition when the denoised second speech segment includes at least one preset keyword, and establish the connection with the cloud server through the first communication module 120.

That is, in the present disclosure, a denoising component 113 is set between the speech detection component 111 and the keyword detection component 112 in the speech processor 110, and the denoising component 113 performs denoising processing on the second speech segment output by the speech detection component 111 to filter out the background noise in the second speech segment, such as environmental noise, etc., so that the denoised second speech segment is clearer and purer. Therefore, the keyword detection component 112 performs keyword detection on the denoised second speech segment, which is more accurate and reliable, thus improving the accuracy of keyword detection for the second speech segment.

In the present disclosure, the denoising component 113 can be understood as a device with a Noise Active Cancellation (NAC) algorithm.

Moreover, the output terminal of the denoising component 113 shown in Fig. 4 can further be connected with the first communication module 120, and therefore, the denoising component 113 can be further configured to perform denoise processing on the first speech segment output by the speech detection component 111 and send the denoised first speech segment to the cloud server through the first communication module 120, so that the cloud server generates the first response signal based on the denoised first speech segment. The advantage of this setting is that: the denoising component 113 performs denoise processing on the first speech segment output by the speech detection component 111, and the denoised first speech segment is uploaded to the cloud server through the first communication module 120, so that the cloud server can generate the first response signal based on the denoised first speech segment; on the one hand, it can improve the accuracy of speech recognition and reduce the occurrence of false recognition, thus generating more accurate response data; and on the other hand, it can improve the processing speed of speech data and achieve real-time speech interaction experience.

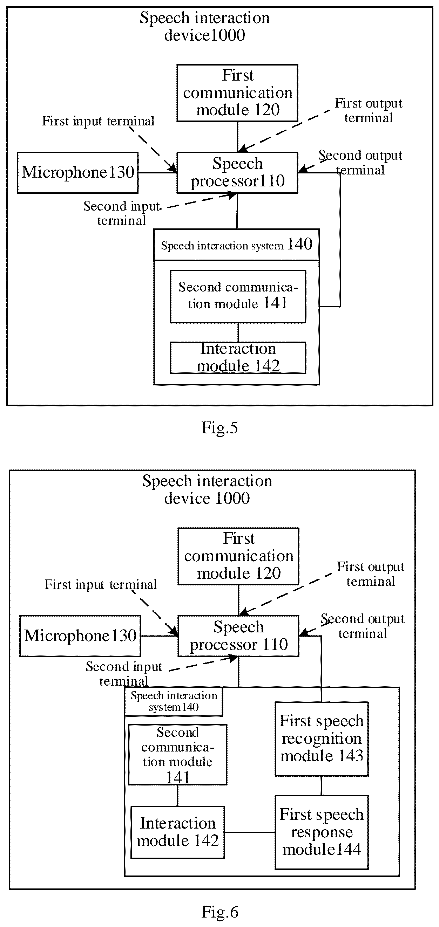

In some optional embodiments, when the first communication module 120 in the present disclosure is a low-power WiFi communication module, there may be a situation absent of WiFi network. Then, in the present disclosure, when the speech processor 110 determines that the second speech signal sent by any microphone 130 meets a second preset condition, optionally, the speech processor 110 can further send a wake-up event to the speech interaction system 140, so as to wake up the speech interaction system 140 and cause the speech interaction system 140 to switch from the standby state to the working state, as shown in Fig. 5.

The second input terminal of the speech processor 110 is connected with the output terminal of the speech interaction system 140, and the second output terminal of the speech processor 110 is connected with the input terminal of the speech interaction system 140.

In the present disclosure, the second preset condition can refer to at least one of detecting that the second speech signal includes a preset wake-up word for waking up the speech interaction system 140, and detecting the absence of WiFi network after receiving the second speech signal sent by any microphone 130.

The number of the preset wake-up words is plural, which can be flexibly set according to the type of the speech interaction device 1000 and the application scenario of the speech interaction device 1000, which is not limited here. For example, the preset wake-up words can be "Hello, XX," "Hi, XXX," and "Zhang San, Zhang San," and so on. It should be understood that XX in the present disclosure can be identification information of the speech interaction device 1000, such as the name of the speech interaction device 1000.

That is, when the speech processor 110 determines that the second speech signal sent by any microphone 130 includes at least one preset wake-up word for waking up the speech interaction system 140 , and/or detects the absence of WiFi network after receiving the second speech signal sent by any microphone 130, a wake-up event is sent to the speech interaction system 140 through the speech processor 110, so as to wake up the speech interaction system 140 in the standby state. Further, the speech interaction system 140 in the working state performs speech recognition processing or the like on the speech signal acquired by the microphone 130, so as to generate a corresponding second response signal. The speech signal acquired by the microphone 130 includes the first speech signal, or the first speech signal and at least one other speech signal.

In this way, when there is no WiFi network and/or the second speech signal includes at least one wake-up word , the speech processor 110 wakes up the speech interaction system 140 in the standby state, and sends the first speech signal or the first speech signal and the at least one other speech signal sent by the microphone 130 to the speech interaction system 140, so that the speech interaction system 140 generates a second response signal according to the first speech signal or according to the first speech signal and the at least one other speech signal, and performs speech interaction with the user based on the second response signal.

It can be understood that when it is determined that the second speech signal includes at least one preset keyword and there is a WiFi network, the speech processor 110 in the present disclosure can send the first speech signal, or the first speech signal and at least one other speech signal to the cloud server through the communication connection between the first communication module 120 and the cloud server, without waking up the speech interaction system 140, thus reducing the power consumption of the speech interaction device 1000 and further prolonging the standby time of the speech interaction device 1000. When it is determined that the second speech signal includes at least one preset wake-up word and/or it is detected that there is no WiFi network after receiving the second speech signal sent by any microphone 130, the speech processor 110 in the present disclosure can send a wake-up event to the speech interaction system 140, so that the speech interaction system 140 in the standby state can enter the working state. Further, the first speech signal, or the first speech signal and the at least one other speech signal are sent to the speech interaction system 140, so that the speech interaction system 140 can generate a second response signal according to the first speech signal or according to the first speech signal and the at least one other speech signal. In this way, it can ensure that the interactive speech sent by the user can be replied to whether in the presence or absence of WiFi network and whether the second speech signal carries a preset keyword or a preset wake-up word, which can not only reduce the power consumption of speech interaction device, but also improves the user's speech interaction experience.

In some optional embodiments, as shown in Fig. 6, the speech interaction system 140 in the present disclosure can further include a first speech recognition module 143 and a first speech response module 144.

The input terminal of the first speech recognition module 143 is connected with the second output terminal of the speech processor 110, the first speech recognition module 143 is configured to convert a speech signal output by the speech processor 110 into text information, and the speech signal is any speech signal obtained by the microphone 130;

The input terminal of the first speech response module 144 is connected with the output terminal of the first speech recognition module 143, and the first speech response module 144 is configured to generate a second response signal according to the text information output by the first speech recognition module 143;

The interaction module 142 is connected with the output terminal of the first speech response module 144, and the interaction module 142 is further configured to perform speech interaction according to the second response signal output by the first speech response module 144.

In the present disclosure, the first speech recognition module 143 can be understood as any functional module that supports Automatic Speech Recognition (ASR) algorithm. The ASR algorithm is used to convert human voice into text.

The first speech response module 144 can be understood as any functional module that supports understanding speech signals and generating response signals corresponding to the speech signals. Optionally, the first speech response module 144 in the present disclosure can be a Large Language Model (LLM) that supports understanding speech signals and generating response signals corresponding to the speech signals. The LLM is a model which is obtained by training a deep learning model with massive training data and can recognize, understand and generate corresponding text or speech content.

Optionally, when it is determined that the second speech signal includes at least one preset wake-up word, and/or it is detected that there is no WiFi network after receiving the second speech signal sent by any microphone 130, the speech processor 110 can send, after obtaining the first speech signal sent by the microphone 130, the first speech signal or the first speech signal and at least one other speech signal to the first speech recognition module 143 in the speech interaction system 140 in the working state, so that the first speech recognition module 143 performs automatic speech recognition processing on the first speech signal or the first speech signal and the at least one other speech signal, so as to convert the first speech signal or the first speech signal and the at least one other speech signal into corresponding text information. Then, the text information is output to the first speech response module 144 connected thereto, so that the first speech response module 144 performs semantic parsing processing or the like on the obtained text information to generate a corresponding second response signal.

Next, the first speech response module 144 sends the generated second response signal to the interaction module 142, so that the interaction module 142 can perform speech interaction with the user according to the second response signal output by the first speech response module 144.

In the present disclosure, the second response signal can be response speech data, or response text data, or response speech data and response text data.

Optionally, after the interaction module 142 receives the second response signal sent by the first speech response module 144, the interaction module 142 can determine the type of the second response signal. If it is determined that the second response signal is response speech data, the response speech data is played to the user through the speaker in the speech interaction system 140. If it is determined that the second response signal is response text data, the response text data can be converted into response speech data, and the response speech data can be played to the user through the speaker in the speech interaction system 140. If it is determined that the second response signal is response speech data and response text data, the response speech data can be played to the user through the speaker in the speech interaction system 140, and the response text data can be displayed to the user through an interactive screen provided by the interaction module 142, thus improving the diversity of speech interaction.

In some alternative embodiments, it is considered that the speech processor 110 may determine that there is currently no wireless network, such as WiFi network after determining that the second speech signal sent by the microphone 130 meets the first preset condition, then the speech processor 110 can wake up the speech interaction system 140, and send the first speech signal or the first speech signal and at least one other speech signal sent by the microphone 130 to the speech interaction system 140, so that the speech interaction system 140 processes the first speech signal or the first speech signal and the at least one other speech signal to generate a second response signal. However, when the speech processor 110 sends the first speech signal sent by the microphone 130 to the speech interaction system 140, or after the speech processor 110 sends the first speech signal sent by the microphone 130 to the speech interaction system 140, there may be a wireless network. Then, in the present disclosure, when there is a wireless network, the first speech signal or the first speech signal and the at least one other speech signal can be sent to the cloud server through the speech interaction system 140, so that the cloud server can generate the first response signal according to the first speech signal or according to the first speech signal and the at least one other speech signal.

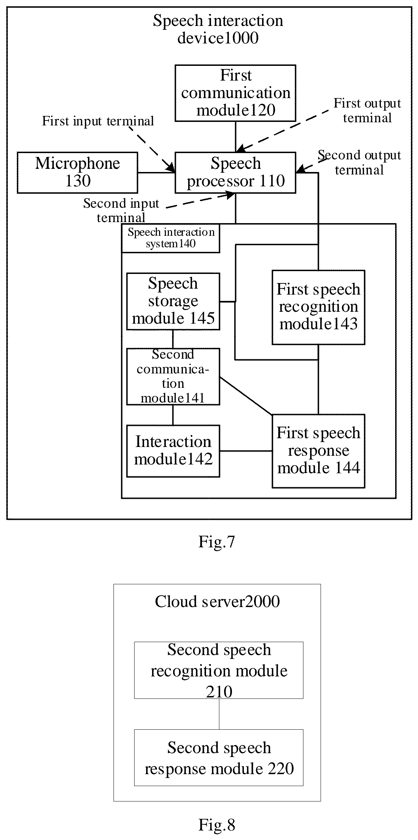

As shown in Fig. 7, the speech interaction system 140 of the present disclosure can further include a speech storage module 145;

The input terminal of the speech storage module 145 is connected with the second output terminal of the speech processor 110 and the output terminal of the first speech recognition module 143, respectively, and the speech storage module 145 is configured to store the speech signal output by the speech processor 110 or to store the text information output by the first speech recognition module 143;

The output terminal of the speech storage module 136 is connected with the cloud server through the second communication module 141, and the speech storage module 145 is further configured to transmit the speech signal or the text information to the cloud server through the second communication module 141, so that the cloud server generates the first response signal based on the speech signal or the text information.

The first speech response module 144 is further configured to receive the first response signal generated by the cloud server through the second communication module 141, and fuse the first response signal with the second response signal to obtain a fused response signal;

The interaction module 142 is further configured to perform speech interaction according to the fused response signal output by the first speech response module 144.

In the present disclosure, the speech signal output by the speech processor is any speech signal obtained by the microphone. Optionally, the speech signal can be the first speech signal, or the first speech signal and at least one other speech signal.

Optionally, when the speech processor 110 sends a speech signal to the speech interaction system 140, the speech storage module 145 in the speech interaction system 140 stores the speech signal sent by the speech processor 110, and at the same time, the first speech recognition module 143 in the speech interaction system 140 performs an automatic conversion operation on the speech signal sent by the speech processor 110 to obtain text information corresponding to the speech signal. Moreover, after the first speech recognition module 143 obtains the text information, it can further send the text information to the speech storage module 145, so as to lay a foundation for subsequently generating a second response signal by processing the text information through the cloud server via the wireless network.

In some optional embodiments, when the speech storage module 145 stores the speech signal sent by the speech processor 110 and after the speech signal is stored, if it is determined that there is a wireless network currently, the speech storage module 145 can send the speech signal stored by itself to the cloud server through the second communication module 141, so that the cloud server generates the first response signal based on the received speech signal.

In some optional embodiments, when the speech storage module 145 stores the text signal sent by the first speech recognition module 143 and after the text signal is stored, if it is determined that there is a wireless network currently, the speech storage module 145 can send the text information stored by itself to the cloud server through the second communication module 141, so that the cloud server generates the first response signal based on the text information.

Optionally, in the present disclosure, while the first speech recognition module 143 sends the text information to the speech storage module 145, the first speech recognition module 143 can also output the text information to the first speech response module 144, so that the first speech response module 144 can generate a second response signal according to the text information.

While the first speech response module 144 generates the second response signal according to the text information, the cloud server can generate the first response signal according to the received speech signal or text information, and can further send the first response signal to the first speech response module 144. Therefore, when the first speech response module 144 obtains the first response signal sent by the cloud server, it can fuse the first response signal with the second response signal to obtain a fused response signal. Then, the fused response signal is output to the interaction module 142, so that the interaction module 142 can perform speech interaction with the user according to the fused response signal, which can further improve the accuracy of speech interaction and provide more accurate interactive feedback for the user.

Hereinafter, with reference to Fig. 8, a cloud server provided by an embodiment of the present disclosure will be described. Fig. 8 is a schematic structural diagram of a cloud server provided by an embodiment of the present disclosure. As shown in Fig. 8, the cloud server 2000 can include a second speech recognition module 210 and a second speech response module 220.

The second speech recognition module 210 is configured to convert a speech signal sent by a speech interaction device into text information;

The second speech response module 220 is configured to generate a first response signal according to the text information output by the second speech recognition module 210, and send the first response signal to the speech interaction device, so that the speech interaction device performs speech interaction according to the first response signal.

In the present disclosure, the second speech recognition module 210 can be understood as any functional module that supports Automatic Speech Recognition (ASR) algorithm. The ASR algorithm is used to convert human voice into text.

The second speech response module 220 can be understood as any functional module that supports understanding speech signals and generating response signals corresponding to the speech signals. Optionally, the second speech response module 220 in the present disclosure can be a Large Language Model (LLM) that supports understanding speech signals and generating response signals corresponding to the speech signals. The LLM is a model which is obtained by training a deep learning model with massive training data and can recognize, understand and generate corresponding text or speech content.

Moreover, the speech signal sent by the speech interaction device includes a first speech signal, or the first speech signal and at least one other speech signal.

In some embodiments, after obtaining the speech signal sent by the speech interaction device, the cloud server 200 can perform automatic speech recognition processing on the speech signal though the second speech recognition module 210, so as to convert the speech signal into corresponding text information. Then, the second speech recognition module 210 outputs the text information to the second speech response module 220, so that the second speech response module 220 performs semantic parsing processing or the like on the obtained text information, so as to generate a corresponding first response signal.

Next, the second speech response module 220 can return the first response signal to the speech interaction device, so that the speech interaction device can perform speech interaction with the user based on the first response signal.

It is considered that the cloud server 2000 can obtain the text information corresponding to the speech signal from the speech interaction device, and at this time, the second speech response module 220 in the cloud server 2000 can directly perform semantic parsing processing or the like on the text information to generate the corresponding first response signal, while the second speech recognition module 210 does not need to perform any processing on the text information, thus further improving the data processing efficiency of the cloud server.

In the technical solution provided by the embodiment of the present disclosure, the second speech recognition module in the cloud server converts the speech signal sent by the speech interaction device into text information, the second speech response module in the cloud server performs semantic parsing processing or the like on the text information output by the second speech recognition module to generate a first response signal, and the first response signal is sent to the speech interaction device, so that the speech interaction device performs speech interaction according to the first response signal. **In** this way, based on the powerful data processing capability of the cloud server, the speech signal uploaded by the speech interaction device can be quickly parsed and processed, so that a response signal can be quickly generated, and the instant interaction effect between the user and the speech interaction device can be realized without waiting for a long time, thereby improving the speech interaction experience of the user.

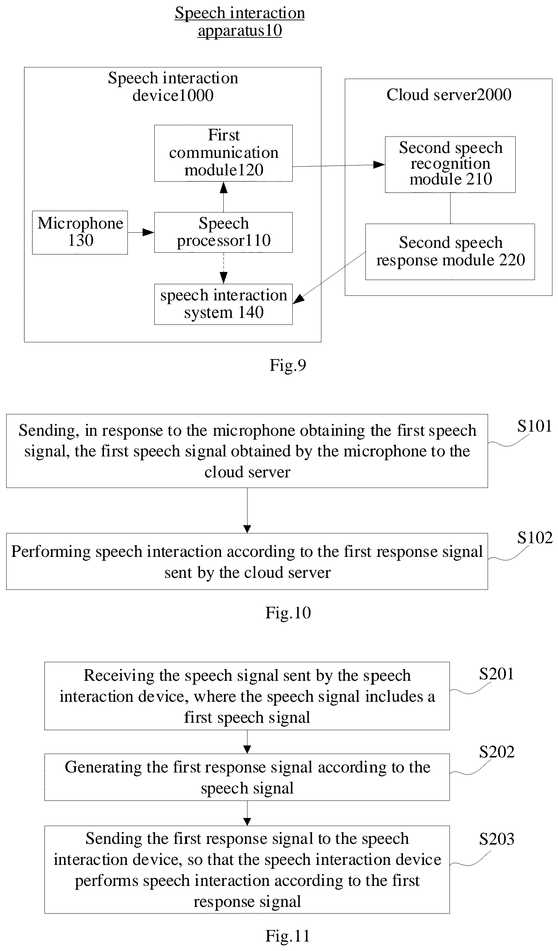

Hereinafter, with reference to Fig. 9, a speech interaction apparatus proposed by an embodiment of the present disclosure will be described. As shown in Fig. 9, the speech interaction apparatus 10 includes the speech interaction device 1000 described in the foregoing embodiment and the cloud server 2000 described in the foregoing embodiment.

The speech processor 110 in the speech interaction device 1000 determines that the microphone 130 obtains the first speech signal or the first speech signal and at least one other speech signal, and sends the first speech signal or the first speech signal and the at least one other speech signal to the second speech recognition module 210 in the cloud server 2000 through the connection established between the first communication module 120 and the cloud server 2000; the second speech recognition module 210 converts the first speech signal or the first speech signal and the at least one other speech signal into text information and outputs the text information to the second speech response module 220, the second speech response module 220 generates the first response signal according to the text information, and sends the first response signal to the speech interaction system 140 in the speech interaction device 1000, so that the speech interaction system 140 performs speech interaction with the user based on the first response signal.

It should be understood that in the embodiment of the speech interaction apparatus 10, the specific implementation process of the speech interaction device 1000 and the cloud server 2000, and the interaction process between the speech interaction device 1000 and the cloud server 2000, can be referred to the foregoing embodiment of the speech interaction device 1000 and the foregoing embodiment of the cloud server 2000, which will not be repeated here to avoid repetition.

Fig. 10 is a flowchart of a speech interaction method provided by an embodiment of the present disclosure. The speech interaction method provided by the embodiment of the present disclosure can be applied to any speech interaction device in the foregoing embodiments. The specific structure of the speech interaction device can be found in the foregoing embodiments, and will not be repeated here. As shown in Fig. 10, the speech interaction method can include the following steps:
S101: Sending, in response to the microphone obtaining the first speech signal, the first speech signal obtained by the microphone to the cloud server.
S102: Performing speech interaction according to the first response signal sent by the cloud server.

In some optional embodiments, the speech interaction method further includes:
determining, in response to the microphone obtaining a second speech signal, whether the second speech signal meets a first preset condition;
in response to the second speech signal meeting the first preset condition, establishing a connection with the cloud server through the first communication module, and sending the first speech signal obtained by the microphone to the cloud server, where the second speech signal being obtained by the microphone is before the first speech signal being obtained by the microphone.

In some optional embodiments, the first response signal is generated based on any speech signal obtained by the microphone.

In some optional embodiments, the determining whether the second speech signal meets a first preset condition includes:
performing speech detection on the second speech signal obtained by the microphone to obtain a second speech segment;
performing keyword detection on the second speech segment, and determining that the second speech signal meets the first preset condition in response to determining that the second speech segment includes at least one preset keyword.

In some optional embodiments, the sending the first speech signal obtained by the microphone to the cloud server includes:
performing speech detection on the first speech signal obtained by the microphone to obtain a first speech segment, and sending the first speech segment to the cloud server through the first communication module, so that the cloud server generates the first response signal based on the first speech segment.

In some optional embodiments, the speech interaction method further includes:
performing denoise processing on the second speech segment;
performing keyword detection on the denoised second speech segment, and determining that the second speech signal meets the first preset condition in response to determining that the denoised second speech segment includes at least one preset keyword.

In some optional embodiments, the speech interaction method further includes:
performing denoise processing on the first speech segment, and sending the denoised first speech segment to the cloud server, so that the cloud server generates the first response signal based on the denoised first speech segment.

In some optional embodiments, the performing speech interaction according to the first response signal sent by the cloud server includes:
receiving the first response signal sent by the cloud server, and performing speech interaction according to the first response signal.

In some optional embodiments, the speech interaction method further includes:
sending a wake-up event to the speech interaction system in response to determining that a second speech signal obtained by the microphone meets a second preset condition, so as to wake up the speech interaction system.

In some optional embodiments, the speech interaction method further includes:
converting a speech signal into text information, where the speech signal is any speech signal obtained by the microphone;
generating a second response signal according to the text information;
performing speech interaction according to the second response signal.

In some optional embodiments, the speech interaction method further includes:
storing the speech signal or storing the text information corresponding to the speech signal;
transmitting the speech signal or the text information to the cloud server, so that the cloud server generates the first response signal based on the speech signal or the text information;
receiving the first response signal generated by the cloud server, and fusing the first response signal with the second response signal to obtain a fused response signal;
performing speech interaction according to the fused response signal.

It should be understood that in the present disclosure, the embodiment of the speech interaction method here corresponds to the embodiment of the speech interaction device, and similar descriptions can be found in the embodiment of the speech interaction device. In order to avoid repetition, they are not repeated here.

Fig. 11 is a flowchart of a speech interaction method provided by an embodiment of the present disclosure. The speech interaction method provided by the embodiment of the present disclosure can be applied to any cloud server in the foregoing embodiments. The specific structure of the cloud server can be found in the foregoing embodiments, and will not be repeated here. As shown in Fig. 11, the speech interaction method can include the following steps:
S201: Receiving the speech signal sent by the speech interaction device, where the speech signal includes a first speech signal.
S202: Generating the first response signal according to the speech signal.
S203: Sending the first response signal to the speech interaction device, so that the speech interaction device performs speech interaction according to the first response signal.

In some optional embodiments, the speech interaction method further includes:
receiving text information sent by the speech interaction device, where the text information corresponds to the speech signal;
generating the first response signal according to the text information.

It should be understood that in the present disclosure, the embodiment of the speech interaction method here corresponds to the embodiment of the cloud server, and similar descriptions can be found in the embodiment of the cloud server. In order to avoid repetition, they are not repeated here.

The present disclosure further provides a non-transitory computer storage medium, on which a computer program is stored; and the computer program, when executed by a computer, enables the computer to perform any speech interaction method described above.

The present disclosure further provides a computer program product containing program instructions; and the program instructions, when run on an electronic device, cause the electronic device to perform any speech interaction method described above.

When implemented in software, the above embodiments can be entirely or partially implemented in the form of a computer program product. The computer program product includes one or more computer instructions. When the computer program instructions are loaded and executed on a computer, the processes or functions described in the embodiments of the present disclosure are generated in whole or in part. The computer can be a general purpose computer, an application specific computer, a computer network, or any other programmable apparatuses. The computer instructions can be stored on a computer-readable storage medium or transmitted from one computer-readable storage medium to another computer-readable storage medium. For example, the computer instructions can be transmitted from one web site, computer, server, or data center to another web site, computer, server, or data center through a wired manner (such as a coaxial cable, an optical fiber, a Digital Subscriber Line (DSL)) or a wireless manner (such as infrared, wireless, microwave, etc.). The computer-readable storage medium can be any usable medium that can be accessed by a computer or a data storage device integrated with one or more usable medium, such as a server or a data center, etc. The usable medium can be a magnetic medium (e.g., a floppy disk, a hard disk, a magnetic tape), an optical medium (e.g., a Digital Video Disc (DVD)), or a semiconductor medium (e.g., a Solid State Disk (SSD)), etc.

It can be appreciated by those skilled in the art that the modules and the steps of the algorithm of various examples described in combination with the embodiments disclosed herein can be implemented in electronic hardware or a combination of computer software and electronic hardware. Whether these functions are implemented in hardware or software depends on specific applications and design constraint conditions of the technical solutions. For each specific application, professionals and technicians can use different methods to implement the described functions, and such implementations should not be considered as going beyond the scope of the present disclosure.

In several embodiments provided by the present disclosure, it should be understood that the disclosed systems, devices and methods can be implemented in other ways. For example, the device embodiments described above are merely illustrative. For example, the modules are merely divided based on logic functions. In practical implementation, the modules may be divided in other manners. For example, multiple modules or components may be combined or integrated into another system, or some features may be omitted or not executed. In addition, mutual coupling or direct coupling or communication connection shown or discussed may be implemented as indirect coupling or communication connection via some interfaces, apparatuses or modules, which may be electrical, mechanical or in other forms.

The modules illustrated as separate components may be or not be physically separated, and components shown as modules may be or not be physical modules, that is, may be located in one place, or distributed onto multiple network units. Some or all of the modules may be selected according to actual needs, so as to achieve the objective of the embodiments of the present disclosure. For example, respective functional modules in respective embodiments of the present disclosure may be integrated into one processing module, or may be present as separate physical entities. It is also possible to integrate two or more modules into one module.

In the embodiments of the present disclosure, the term "module" or "unit" refers to a computer program or a part of the computer program that has a predetermined function, works together with other related parts to achieve a predetermined goal, and can be implemented in whole or in part by using software, hardware (such as a processing circuit or a memory), or a combination thereof. Similarly, a processor (or multiple processors or memories) can be used to implement one or more modules or units. In addition, each module or unit can be a part of an overall module or unit that includes the functions of the module or unit.

The above is only a specific implementation of the present disclosure, but the scope of protection of the present disclosure is not limited to this. Those skilled in the art can easily think of changes or replacements within the technical scope disclosed in the present disclosure, which should be included in the scope of protection of this disclosure. Therefore, the scope of protection of the present disclosure should be based on the scope of protection of the claims.

## Claims

1. A speech interaction device (1000), comprising a speech processor (110), a first communication module (120), at least one microphone (130), and a speech interaction system (140), wherein the speech interaction system (140) comprises a second communication module (141);
a first input terminal of the speech processor (110) is connected with the microphone (130), a first output terminal of the speech processor (110) is connected with the first communication module (120), and the speech processor (110) is configured to determine that the microphone (130) obtains a first speech signal, establish a connection with a cloud server through the first communication module (120), and send the first speech signal obtained by the microphone (130) to the cloud server; and
the speech interaction system (140) is connected with the cloud server through the second communication module (141), and the speech interaction system (140) is configured to receive a first response signal sent by the cloud server for speech interaction.

2. The speech interaction device (1000) according to claim 1, wherein a power consumption of the first communication module (120) is less than a power consumption of the second communication module (141).

3. The speech interaction device (1000) according to claim 1, wherein the speech processor (110) is further configured to establish a connection with the cloud server through the first communication module (120) in response to determining that a second speech signal obtained by the microphone (130) meets a first preset condition, and send the first speech signal obtained by the microphone (130) to the cloud server, wherein the second speech signal being obtained by the microphone (130) is before the first speech signal being obtained by the microphone (130).

4. The speech interaction device (1000) according to claim 1, wherein the speech interaction system (140) is further configured to perform speech interaction according to the first response signal sent by the cloud server; and
the first response signal sent by the cloud server is generated based on any speech signal obtained by the microphone (130).

5. The speech interaction device (1000) according to claim 3, wherein the speech processor (110) comprises a speech detection component (111) and a keyword detection component (112);
an input terminal of the speech detection component (111) is connected with the microphone (130), and the speech detection component (111) is configured to perform speech detection on the second speech signal obtained by the microphone (130) to obtain a second speech segment;
an input terminal of the keyword detection component (112) is connected with an output terminal of the speech detection component, and the keyword detection component (112) is configured to perform keyword detection on the second speech segment output by the speech detection component, determine that the second speech signal meets the first preset condition in response to determining that the second speech segment comprises at least one preset keyword, and establish the connection with the cloud server through the first communication module (120).

6. The speech interaction device (1000) according to claim 5, wherein the output terminal of the speech detection component (111) is connected with the first communication module (120), and the speech detection component (111) is further configured to perform speech detection on the first speech signal obtained by the microphone (130) to obtain a first speech segment, and send the first speech segment to the cloud server through the first communication module (120), so that the cloud server generates the first response signal based on the first speech segment.

7. The speech interaction device (1000) according to claim 5, wherein the speech processor (110) further comprises a denoising component (113);
an input terminal of the denoising component (113) is connected with the output terminal of the speech detection component (111), and the denoising component (113) is configured to perform denoise processing on the second speech segment output by the speech detection component (111); and
the input terminal of the keyword detection component (112) is connected with an output terminal of the denoising component (113), and the keyword detection component (112) is configured to perform keyword detection on the denoised second speech segment output by the denoising component.

8. The speech interaction device (1000) according to claim 7, wherein the output terminal of the denoising component (113) is connected with the first communication module (120), and the denoising component (113) is further configured to perform denoise processing on the first speech segment output by the speech detection component (111), and send the denoised first speech segment to the cloud server through the first communication module (120), so that the cloud server generates the first response signal based on the denoised first speech segment.

9. The speech interaction device (1000) according to claim 1, wherein the speech interaction system (140) further comprises an interaction module (142); and
the interaction module (142) is connected with the cloud server through the second communication module (141), and is configured to receive the first response signal sent by the cloud server and perform speech interaction according to the first response signal.

10. The speech interaction device (1000) according to claim 1, wherein a second input terminal of the speech processor (110) is connected with an output terminal of the speech interaction system (140), a second output terminal of the speech processor (110) is connected with an input terminal of the speech interaction system (140), and the speech processor (110) is further configured to send a wake-up event to the speech interaction system (140) in response to determining that a second speech signal obtained by the microphone (130) meets a second preset condition, so as to wake up the speech interaction system (140).

11. The speech interaction device (1000) according to claim 1, wherein the speech interaction system (140) further comprises a first speech recognition module (143) and a first speech response module (144);
an input terminal of the first speech recognition module (143) is connected with a second output terminal of the speech processor (110), the first speech recognition module (143) is configured to convert a speech signal output by the speech processor (110) into text information, and the speech signal is any speech signal obtained by the microphone (130);
an input terminal of the first speech response module (144) is connected with an output terminal of the first speech recognition module (143), and the first speech response module (144) is configured to generate a second response signal according to the text information output by the first speech recognition module (143); and
the interaction module (142) is connected with an output terminal of the first speech response module (144), and the interaction module (142) is further configured to perform speech interaction according to the second response signal output by the first speech response module (144).

12. The speech interaction device (1000) according to claim 11, wherein the speech interaction system (140) further comprises a speech storage module (145);
an input terminal of the speech storage module (145) is connected with the second output terminal of the speech processor (110) and the output terminal of the first speech recognition module (143), respectively, and the speech storage module (145) is configured to store the speech signal output by the speech processor (110) or to store the text information output by the first speech recognition module (143);
an output terminal of the speech storage module (145) is connected with the cloud server through the second communication module (141), and the speech storage module (145) is further configured to transmit the speech signal or the text information to the cloud server through the second communication module (141), so that the cloud server generates the first response signal based on the speech signal or the text information;
the first speech response module (144) is further configured to receive the first response signal generated by the cloud server through the second communication module (141), and fuse the first response signal with the second response signal to obtain a fused response signal; and
the interaction module (142) is further configured to perform speech interaction according to the fused response signal output by the first speech response module.

13. A speech interaction apparatus, comprising the speech interaction device (1000) of any one of claims 1 to 12 and a cloud server (2000),
the cloud server (2000) comprises a second speech recognition module (210) and a second speech response module (220), wherein the second speech recognition module (210) is configured to convert the first speech signal sent by the speech interaction device into text information; and the second speech response module (220) is configured to generate the first response signal according to the text information output by the second speech recognition module (210), and send the first response signal to the speech interaction device (1000), so that the speech interaction device (1000) performs speech interaction according to the first response signal.

14. A speech interaction method, applied to the speech interaction device according to claim 1, wherein the method comprises:
sending, in response to the microphone obtaining the first speech signal, the first speech signal obtained by the microphone to the cloud server (S101); and
performing speech interaction according to the first response signal sent by the cloud server (S102).

15. A non-transitory computer-readable storage medium, configured to store a computer program, wherein the computer program causes a computer to execute the speech interaction method according to claim 14.
